(19) Europäisches Patentamt
European Patent Office
Office européen des brevets

(11) Publication number: **0 463 754 A1**

# (12) EUROPEAN PATENT APPLICATION

(21) Application number: **91305114.0**

(22) Date of filing: **06.06.91**

(51) Int. Cl.[5]: **C08K 5/524**, C08K 5/527, C08L 33/24

(30) Priority: **25.06.90 US 543260**

(43) Date of publication of application: **02.01.92 Bulletin 92/01**

(84) Designated Contracting States: **AT BE CH DE DK ES FR GB GR IT LI LU NL SE**

(71) Applicant: **ROHM AND HAAS COMPANY**
**Independence Mall West**
**Philadelphia Pennsylvania 19105(US)**

(72) Inventor: **de Graff, Darnell**
**3241 Hulmeville Road, Apt. 39**
**Bensalem, Pennsylvania 19020(US)**

(74) Representative: **Angell, David Whilton et al**
**ROHM AND HAAS (UK) LTD. European Operations Patent Department Lennig House**
**2 Mason's Avenue**
**Croydon CR9 3NB(GB)**

## (54) Stabilization of glutarimide polymers.

(57) Polymers containing a predominance of units of N-(lower alkyl)dimethylglutarimide and substantially free of units of methacrylic acid or methacrylic anhydride may be stabilized against discoloration, both in processing of the polyglutarimide and in heat aging, by inclusion of certain trialkylphosphite or aliphatic bicyclic diphosphite stabilizers.

EP 0 463 754 A1

This invention is concerned with the stabilization of polymers containing a preponderance of units of N-(lower alkyl)dimethylglutarimides, and substantially free of units of methacrylic acid or methacrylic anhydride, against bubbling or discoloration under certain conditions.

Such bubbling or discoloration may develop upon exposure to temperatures above the glass temperature of the polymer, such as during molding or extrusion. Discoloration may also develop upon heat aging, such as in uses where the shaped polymer is exposed to temperatures above about 80 °C for long periods of time.

We have now surprisingly found that certain trialkylphosphite or bicyclic aliphatic diphosphite stabilizers are useful in combating these developments.

The invention is also concerned with the use of stabilized polymers as formed by heat into molded or extruded products free of yellow color and without bubbles formed on processing thick pieces.

For the purpose of this disclosure and claims, by the term "polyglutarimide" refers we mean a polymer which contains more than about 50 weight percent of units of the cyclic structure (N-lower alkyl)-dimethylglutarimide. Since the discovery by Kopchik, U. S. -A-4,246,374, of thermally stable polyglutarimides and a practical process for their preparation, such polymers, especially those prepared by the treatment of poly(methyl methacrylate) with monomethylamine in a devolatilizing extruder, have been employed as clear glazing or protective materials having acceptable impact and modulus properties and with a higher service temperature than most clear thermoplastics. The technology taught in U.S.-A-4,246,374 relates to reaction with a variety of amines; although the stabilization incorporated by the specific phosphite or diphosphite stabilizers of the present invention is expected to be seen with all glutarimide polymers so taught, the present invention relates only to those glutarimide polymers prepared from primary N-lower alkylamines of four or fewer carbon atoms, such as methylamine, ethylamine, propylamine, n-butylamine, and i-butylamine.

In the preparation of polyglutarimides, whether from polymers having mers of methyl methacrylate, methacrylic acid, or methacrylic anhydride, it is difficult to avoid forming a low percentage of units of methacrylic acid or anhydride. In certain uses, such add or anhydride units are undesirable, as they adversely affect water absorption equilibrium values. Means to remove such groups, such as taught by Hallden-Abberton et al., U.S.-A-4,727,117, for reduction of acid content in such polyglutarimides by a post-polymerization reaction have led to poly(glutarimides) of improved chemical resistance, including water resistance, miscibility, and melt flow. It is the acid-reduced polymers of the Hallden-Abberton et al. invention which are stabilized by the additive or additives of the present invention.

EP-A-396336 teaches that glutarimide polymers, because of their high service temperature, require high-temperature melt processing conditions which can adversely effect color and that, with the stabilized low residual acid polymers of U.S.-A-4,727,117, conventional thermo-oxidative stabilizers may be employed, such as tris(nonylphenyl)phosphite, dialkyl pentaerythritol diphosphites, dialkaryl pentaerythritol diphosphites, and the like. Furthermore that if acid groups are present, those otherwise effective stabilizers are destroyed, and volatiles may be liberated on molding which adversely affect the appearance of a molded part.

This reference does not motivate choice of the specific trialkylphosphite or dialkyl cyclic diphosphite stabilizers to achieve the combination of improved initial color and long-term heat stability which has been sought for some time and which is not achieved by any other phosphite stabilizers for glutarimides known to the art, including the trialkaryl phosphites, such as tris(nonylphenyl) phosphite used commercially or the specific phosphites and phosphonites taught in the earlier application.

U.S.-A-4,745,159 teaches a glutarimide polymer of low yellowness prepared by use of a precursor polymer with low methacrylate dimer content and a specialized solution polymerization process. Stabilizers, such as organophosphites, are preferred to be added to prevent depolymerization, but the specific stabilizers of the present invention are not disclosed. The reference teaches molding to thin plaques of excellent optical properties, but is silent on thermal instability or color formation in thicker moldings.

Japanese Kokai 58-183729 broadly teaches the use of organophosphorus compounds to improve impact strength and lessen thermal discoloration of polymers having imide side chains. It does not describe the specific imide polymers of U.S.-A-4,246,374, nor exemplify any glutarimide polymer. It does specifically name certain trialkyl phosphites and aliphatic bicyclic diphosphites of the present invention.

Japanese Kokai 61-132189 broadly teaches the use of organophosphorus compounds as stabilizers for pigmented blends of imide polymers and other polymers. It does not describe the specific imide polymers of U.S.-A- 4,246,374, nor exemplify any glutarimide polymer. It does specifically name certain trialkyl phosphites and aliphatic cyclic diphosphites of the present invention.

Japanese Kokai 64-22951 broadly teaches the use of organophosphorus compounds to lessen thermal discoloration of polymers having glutarimide units. It does not teach the specific acid-reduced glutarimides

of the present invention. It does specifically name certain trialkyl phosphites and aliphatic cyclic diphosphites of the present invention. The results, which show improved yellowness index (lower increase after exposure) for all of the selected phosphorus compounds, do not show the unexpected improvements for the selected stabilizers of the present invention.

EP-A-332,136 teaches stabilization of polymers containing glutarimide units, but not the specific acid-reduced polyglutarimides of the present invention, against UV degradation by the presence of a HALS (hindered amine light stabilizer), and further teaches combination of HALS with another UV stabilizer, such as a benzotriazole, and with an unspecified phosphite stabilizer.

The classes of trialkylphosphites or aliphatic cyclic diphosphites, as well as the benzotriazole and HALS ultraviolet stabilizers, of the present invention have species which are commercially available and known to stabilize other plastics.

Thus, this invention addresses problems in the initial and long-term thermal stability of certain acid-reduced polyglutarimides.

We have discovered that a specific class of trialkylphosphite or dialkyl bicyclic diphosphites impart, to glutarimide polymers substantially free of acid or anhydride units stability against discoloration and bubble formation on molding, as well as maintaining low color on heat aging or exposure to heat and light, especially ultraviolet light.

By polymers containing units of N(lower alkyl)dimethylglutarimide is meant polymers with units of the structure

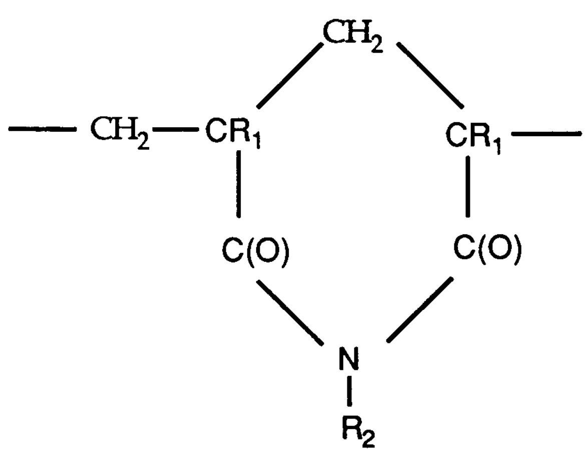

where $R_1$ is methyl, and $R_2$ is $C_1$-$C_4$ n-, sec- or iso- alkyl. Preferred is $R_2$ = methyl. The invention relates to such polymers where the weight percent of such units is above about 50 %. Preferred for high service temperature are those polymers where the weight percent of such units is from about 60% to about 90%. Such preferred polymers, when R2 is methyl, have a glass temperature or Vicat softening temperature (a measure of temperature required for a defined extent of penetration, related to the glass temperature) of at least about 140 °C

The teaching of US-A-4,246,374 should be followed as regards the optional presence in the polymer of other units. Preferred units are those of the esters, especially the lower alkyl esters of those acids; styrene; alpha-methylstyrene; and alkyl styrenes. More preferred are units of lower alkyl methacrylates, such as methyl methacrylate, or lower alkyl acrylates, such as methyl or ethyl acrylate. Especially preferred are units of methyl methacrylate.

The polymer is preferably prepared by the method of U.S.-A-3,246,374, but other processes, such as reaction of poly(methyl methacrylate) with monomethylamine in a pressurized kettle at high temperature, reaction of polymers with a high percentage of methyl methacrylate mers with a primary alkyl amine in an appropriate solvent, or reaction of polymers with a high percentage of N-methylmethacrylamide units to eliminate methyl amine, may be used. Such polymers may not exhibit the thermal stability or clarity of those prepared by the process of U.S.-A-3,246,374, which thermal stability is expressed by a weight loss of no more than 1% at a temperature of 285 °C, as measured by thermogravimetric analysis, as well as by solubility in solvents such as dimethylformamide and tetrahydrofuran.

The polymers containing glutarimide units must have a low acid and/or anhydride content, such as below 0.40 millequivalents/gram, and such polymer may best be prepared by following the teachings as to the acid-reduction method of Hallden-Abberton et al. in U.S.-A-4, 727,117, wherein the free acid and/or

anhydride group content is lowered by reacting the precursor polymer with an alkylating or esterifying material in an extruder.

The stabilizing trisaliphatic phosphites of the present invention may be represented by the formula

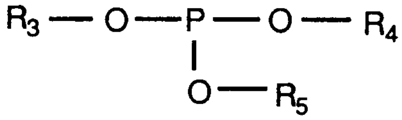

wherein $R_3$, $R_4$, and $R_5$ may be the same or different saturated alkyl groups of from 1 to about 20 carbon atoms. For reasons of lower volatility, preferred are the compositions wherein $R_3$, $R_4$ and $R_5$ are from about 12 to about 20 carbon atoms. The stabilizing aliphatic bicyclic diphosphites of the present invention may be represented by the formula

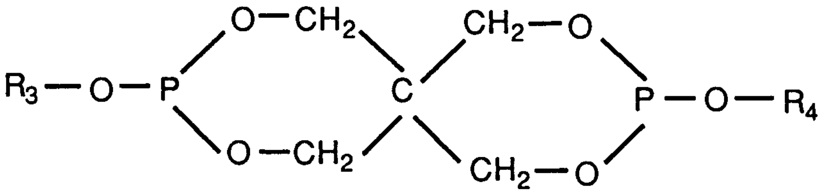

wherein $R_3$ and $R_4$ may be the same or different and are a saturated alkyl group of from 1 to about 20 carbon atoms. For reasons of lower volatility, preferred are the compositions wherein $R_3$ and $R_4$ are from about 12 to about 20 carbon atoms. Especially preferred is the composition wherein $R_3$ and $R_4$ are stearyl groups of eighteen carbon atoms.

The aliphatic phosphite or diphosphite stabilizers may be added to the glutarimide polymer by post-compounding of additives and unstabilized powder or pellets of the glutarimide polymer, or by addition during or prior to the imidization or acid-reduction steps. The aliphatic phosphite or diphosphite stabilizer and other additives may be added prior to, during, or after the preparation of the polymer which is reacted with the lower alkylamine to prepare the glutarimide polymer, such as by addition to poly(methyl methacrylate) in the melt after its polymerization is completed but prior to extrusion and pelletization.

A preferred method is to add the trisaliphatic phosphite or aliphatic bicyclic diphosphite stabilizer, along with any other additives such as toners, lubricants, colorants, ultraviolet stabilizers, and the like, to the molten acid-reduced glutarimide polymer prior to extrusion into pellets, strands, sheet, or film. This process exposes the polymer and the additive to less heat history than re-processing of already extruded polymer.

The level of aliphatic phosphite or diphosphite stabilizer to be effective is from about 0.05 to about 1.0 weight percent, based on the glutarimide polymer (matrix polymer). At lower levels, these stabilizers will be ineffective; at higher levels, these stabilizers may not be fully soluble in the polymer and may cause a deleterious effect on optical properties or heat distortion values. Preferred is from about 0.05 to about 0.50 weight percent.

Lubricants are well-known components of acrylic-based molding materials,serving to prevent sticking to hot metal surfaces and release from the mold or die lips. Such lubricants include high molecular weight alcohols, such as those of twelve to twenty-four carbons, esters, especially long-chain alkyl esters of high molecular weight acids, such as butyl or stearyl stearate, monoesters of glycols, such as ethylene glycol monostearate, stearyl stearamide, and the like. Preferred is stearyl alcohol. Levels of lubricants, when used, may range from about 0.05 to about 0.50 weight percent on polymer; preferred is about 0.30 %.

The stabilized polymer may also contain one or more ultraviolet stabilizers. Ultra-violet stabilizers are well-known additives for thermoplastics, including the present glutarimides, and include hydroxybenzophenones, salicylate esters and benzotriazoles. Also included for specific high temperature uses are the hindered amines disclosed in EP-A-404311. For general purposes, preferred are benzotriazole stabilizers, such 2-(2'-hydroxy-5'-methylphenyl)benzotriazole and 2-(2'-hydroxy-5'-t-octylphenyl) benzotriazole. Preferred is from about 0.10 to about 0.50 percent of the benzotriazole with about 0.05 to about 1.0 percent of the organophosphite, based on weight of the glutarimide matrix polymer.

The hindered amine stabilizers are of the class commercially known as HALS, and the preferred and commercially available materials contain the functionality

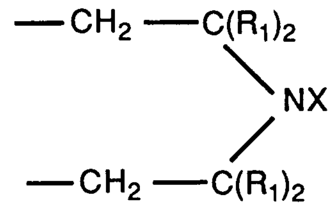

where X is H, $CH_3$, $-O-CH_2-CH_2-$ or -O • , the latter symbol representing an oxygen free radical. Preferred are those HALS materials containing a piperidine ring. Use levels are from about 0.1 to about 1% percent, based on weight of polyglutarimide matrix polymer.

The resulting polymer blend may be molded at melt temperatures recommended for acid-reduced glutarimide polymers, which range from about 246 to about 330 °C, preferably from about 246 to about 316 °C, and most preferably from about 274 to about 316 °C. The polymers may be extruded into film, formed into parisons and blown, or may be compression or injection molded into useful articles. Among these are monolithic bottles and containers, especially those which are biaxially stretch-oriented.

Useful articles which can be prepared from the stabilized acid-reduced glutarimide polymers of the present invention include windows, protective shields, housings, and the like for heat-emitting light sources. Such include lighting for cars, trucks, airplanes, buses, and the like, high intensity discharge lighting, such as from metallic vapors, mercury sources, sodium vapor, and the like.

The stabilized polyglutarimides of the present invention are useful in applications as sheet, film, molded articles, or extruded articles not requiring high values of clarity or visible light transmittance, but which do require color stability and lack of bubble formation on thermal processing. One such use may be in pigmented or colored articles, such as automotive exterior lighting in yellow, red, orange, and the like. A second use may be in surface-altered articles having a matte finish to lower reflectance, alter contact behavior with other surfaces, and the like. Such articles may be prepared by surface roughening, such as extrusion over roughened rolls, by use of certain inorganic fillers, or by use of surface-altering plastic additives with similar refractive indices, in which respect the teachings of Lang in U. S.-A-4,000,216 may be followed.

A related use in in plastic objects specifically treated to diffuse light, either accompanied by a lowering of total light transmittance, as in the case where diffusive additives with different refractive indices are incorporated, or by maintenance of much of the total light transmittance, such as when certain additives of very small particle size or other diffusing additives carefully matched to be close to, but not exactly similar to, the refractive index of the matrix, are employed. Materials of the first type are useful, e.g., as "white" light diffusers for large light sources. Materials of the second type are useful, e.g, as plastics exhibiting a uniform distribution of light over the total surface, such as in large screens for back-lit projection of visual images. Materials of the first type may be prepared, inter alia, by the method of Lang, U.S.-A-3,992,486; materials of the second type may be prepared, inter alia, by the method of Work and Wu, EP-A-342283 and EP-A-269,324.

The plastic object may be completely opaque, as will occur in a highly-filled system with an opaque additive or pigment, such as wollastonite, talc, titanium dioxide, and the like. The opaque formulation may also be a blend with an incompatible plastic, or preferably a blend with a compatible plastic which blend also contains an opaque additive. For example, a blend of the stabilized glutarimide with poly(vinyl chloride), said blend also containing an acrylic impact modifier and a pigment such as titanium dioxide, will be opaque and will be useful as extruded siding for outdoor applications, especially in dark colors.

Acid-reduced glutarimide polymers containing the aliphatic phosphite or diphosphite stabilizers also are useful in blends with other plastics miscible with the glutarimide to yield transparent blends, such as with poly(vinyl chloride), styrene-acrylonitrile, or certain polyamides, as taught in U.S.-A- 4,255,322, U.S.-A-4,436,871 and U.S.-A-4,415,706.

The articles mentioned above may be coated or protected from abrasion by cleaners, storage, dirt, and the like, by use of coatings similar to those taught for glutarimide polymers in the trade literature for Kamax-(R) thermoplastic resin, as published by the assignee of this invention. Appropriate coatings are preferably based on multi-functional acrylic monomers, or on siloxane chemistry, and appropriate technology for forming and applying such coatings is found in such patents as U.S.-A-4,689,243, U.S.-A-4,737,409, U.S.-A-3,451,838, and U.S.-A-3,986,997, as well as Japanese Kokai 85-215032.

The abrasion-resistant coatings may contain colloidal dispersions of silica, such as is taught in U. S.-A-3,986,987, or other metallic materials, such as taught in U. S.-A-4,390,373, U. S.-A-4, U. S.-A-442,168, U. S.-

A-4,500,669, U. S.-A-4,540,634, U. S.-A-4,571,365, and U. S.-A-4,702,773. Such abrasion-resistant coatings may be applied with a tie layer imparting flexibility and better adhesion between the abrasion-resistant coating and the stabilized poly(glutarimide) substrate, such as by use of a solution of an acrylic polymer or a polysiloxane; the latter is taught in U. S.-A-3,616,839. The abrasion-resistant topcoat and/or the tie layer may contain an appropriate stabilizer against the effects of ultra-violet light, as is taught in U. S.-A-4,371,585.

It has been difficult to maintain such coatings on poly(glutarimide) substrates in the past, possibly due to failure at the interface. The polymers of the present invention are expected to be somewhat less susceptible to such degradation, especially if they contain an ultraviolet stabilizer and a limited amount of lubricant. Additional means to improve adhesion include etching of the surface, either physically or with an appropriate solvent, prior to application of the coating, use of an adhesive tiecoat between abrasion-resistant coating and the substrate, and/or use of an ultraviolet stabilizer in the coating to protect against degradation at the surface. It is also possible to use films or sheets of polyglutarimides stabilized as in this invention and also containing ultraviolet stabilizers to protect polymers such as unstabilized glutarimides, polycarbonate, and the like, for formation of laminates or overlays. The composite structures may be formed by co-extrusion of layers, by laminating together layers of pre-formed film or sheet, or by other techniques for making laminated structures that will be readily apparent to those skilled in the art. The layers of the structure are adherent to one another; they may adhere as a result of being co- extruded, of being glued together with a suitable type of adhesive, or of other adhesion processes. The adhesives and the other adhesion processes may be readily selected by those skilled in the art.

The layers of the structure are preferably continuous layers, and more preferably they have a uniform thickness. That is, they do not have discontinuities, holes, thin spots and the like. The preferred thickness of both the gas-barrier layers of the stabilized polyglutarimide and of the more permeable layers is from about 0.02 mm to about 10 mm; the layers may be of equal or different thickness. The adhesive, where used, is not usually considered a layer, unless it forms a continuous layer from about 0.02 to about 10 mm thick which is more permeable than the gas-barrier layer.

The composite structure may be biaxially oriented, uniaxially oriented or unoriented.

The uses to which such composite structures may be placed are many. Films may be used in the packaging of many foodstuffs, such as meat, snacks, boil-in-the-bag items such as frozen vegetables, and the like. Containers suitable for the packaging of carbonated or oxygen-sensitive beverages, such as colas, ginger ale, fruit juice, and the like, may be prepared. Containers suitable for hot-fill or sterilization may be molded from suitable injection-molded or extruded parisons. Such containers or bottles may be used for packaging of condiments, ketchup, maple syrup, and the like. They may also be used for heat-sterilized containers, such as for intravenously administered fluids, and the like.

The present stabilized polyglutarimides may be used in the improved barrier laminate combinations taught in the co-pending application to the same assignee, U. S. Serial No. 218,715, filed July 13, 1988, wherein certain multilayer structures are disclosed of improved barrier performance having two glutarimide layers forming an inclusion of a layer of a more permeable substance.

The present stabilized polyglutarimides may be used in the improved barrier blend combinations taught in the co-pending application to the same assignee, U. S. Serial No. 285,671, filed December 16, 1988, wherein blends of polyglutarimides with polymers containing vinyl alcohol units are disclosed to have unexpectedly outstanding barrier performance at relatively low levels of the polymer containing vinyl alcohol mers.

The stabilized poly(glutarimides) of the present invention may be used in combination with reinforcing or filler materials, such as glass fibers, polymeric fibers, glass beads, titanium dioxide, talc, mica, clay, and the like. They may also be used in combination with other polymers with which they are compatible, such as poly(vinyl chloride), polycarbonates, polyesters, and the like. Many uses already established for such blends using the unstabilized poly(glutarimide) require exposure to outdoor or short-wavelength light, where the stabilized composition of the present invention plus an ultraviolet stabilizer, should exhibit improved stability.

**EXAMPLES**

The following examples are given solely to illustrate some details of the present invention. All percentages are by weight unless otherwise specified, and all reagents are of good commercial quality unless otherwise specified.

A. Polymer Preparations and Incorporation of Stabilizers

All of the polymers containing units of (N-methyl)dimethylglutarimide and units of methacrylic acid were prepared by the method of U. S.-A-4,246,374, utilizing a poly(methyl methacrylate) of MW ca. 150,000 as precursor and monomethylamine. Reactions were carried out to either ca. 66 mol % (76 weight %) of glutarimide mers. The polymers of the present invention were then further reacted with dimethyl carbonate as taught in U. S.-A-4,727,117.

The polymers of the present study were prepared by the reaction of a poly(methyl methacrylate) homopolymer of $MW_w$ ca. 150,000 with monomethyl amine in a devolatilizing twin-screw reactor. As reduction of the acid/anhydride content was desired, the reaction with the agent for reducing acid/anhydride was conducted on the polymer in a continuous manner, i.e., the glutarimide polymer was not isolated prior to the acid-reducing reaction, but the molten glutarimide was carried to an adjacent zone in the extruder and there reacted with the agent, after which the acid-reduced glutarimide was isolated by stranding, cooling, and pelletizing.

The method followed was substantially that of Examples 21 to 27 of U. S.-A-4,727,117, utilizing a non-intermeshing contra-rotating twin screw extruder of 5.1 cm. barrel diameter. Another venting section followed for further devolatilization. The barrel temperature was 288 °C. The polymer was then contacted with dimethyl carbonate and pelletized.

The acid-reduced polymer containing glutarimide units, available as Kamax T-240N from the assignee of this invention, was re-extruded in a single-screw Killion extruder (20.3 mm. diameter) at a melt temperature of 232 °C, the additives being combined in the melt zone just prior to extrusion as a strand. Control polymers wherein no additive was incorporated were also re-processed by extrusion to present a similar heat history, and are noted by (C).

B. Plaques

To measure optical properties, which are yellowness index (YI) (ASTM D-1925), % haze, and % total white light transmission (% TLT) (both by ASTM D-1003), 50.8 mm. x 76.2 mm. x 3.18 mm. plaques were injection molded using a Newberry machine. Processing conditions are found in Table I.

TABLE I

| | |
|---|---|
| Metering (front), °C | 299-304 |
| Barrel temperature, °C | 282 |
| Nozzle (variac), °C | 277 |
| Drying Temp.(overnight), °C | 121 |
| Mold Temp., °C | |
| Stationary | 107 |
| Moveable | 107 |
| 1st Stage Injection (booster) | 15 sec. |
| Total Cycle | 45 sec. |
| Screw Speed (rpm) | 300 -350 |
| Back Pressure Injection (1st stage)(kPa) | 2760 |

Plaques and pellets were aged in an air oven for specific periods of time and their optical properties measured by either qualitative comparisons for pellets or by ASTM methods for plaques.

Testing with high intensity discharge lamps was carried out as taught in W.C.Burkhardt, J,I.E.S., pp. 224-232, July 1977; the test unit is described on p. 224. It consists of rotating cylinder rotating around a HID lamp, the center of the plaques being about 127 mm. from the center of the light source. The temperature of the surrounding air was controlled by a blower and fan. The light source was a Sylvania Metalarc M 4000 400 watt metal halide lamp. The temperature of this exposure was ca. 110 °C.

EXAMPLES 1 -4

These examples list the stabilizers examined in the present study.

| Example | Name |
|---|---|
| 1 | Tris(nonylphenyl)phosphite |
| 2 | Tris-(2,4-di-t-butylphenyl)phosphite |
| 3 | Tris-(2,4-di-t-amylphenyl)phosphite |
| 4 | Distearyl pentaerythritol diphosphite |

EXAMPLE 5

This example shows the advantage of the dialkyl bicyclic diphosphite of Example 4 over the aryl and substituted aryl phosphites previously shown (U. S.-A-346,675 ) to be most effective in stabilizing non-acid reduced polyglutarimides in controlling yellowness development in acid-reduced polyglutarimides on oven aging at 130 °C. Also initial color is significantly improved over several of the aryl phosphites.

| Yellowness Index on Plaques | | | | | |
|---|---|---|---|---|---|
| Exposure Time (weeks) | Control (no additives) | Example 1,0.15% | Example 2,0.14% | Example 3,0.14% | Example 4,0.09% (this invention) |
| 0 | 3.57 | 2.51 | 3.00 | 3.22 | 2.45 |
| 1 | 4.20 | 3.95 | 3.73 | 3.98 | 3.07 |
| 2 | 4.42 | 5.03 | 3.99 | 4.28 | 3.25 |
| 3 | 4.59 | 5.95 | 4.22 | 4.53 | 3.44 |
| 4 | 4.86 | 7.43 | 4.50 | 4.84 | 3.66 |
| 5 | 5.00 | 9.12 | 4.66 | 5.05 | 3.74 |
| 7 | 5.83 | 13.62 | 5.32 | 5.80 | 4.25 |
| 8 | 6.49 | 16.07 | 5.82 | 6.38 | 4.66 |
| 9 | 6.98 | 18.22 | 6.16 | 6.79 | 4.83 |
| 10 | 7.64 | 20.47 | 6.77 | 7.40 | 5.27 |

EXAMPLE 6

This example shows the advantage of the dialkyl bicyclic diphosphite of Example 4 over the aryl and substituted aryl phosphites previously shown to be most effective in stabilizing non-acid reduced polyglutarimides in controlling yellowness development in acid-reduced polyglutarimides on exposure to HID light and radiation at 110 °C. It should be noted that any polyglutarimide exposed to HID exposure where the light emits ultraviolet radiation will also require presence of one or more UV stabilizers for best results.

| Yellowness Index on Plaques | | | | | |
|---|---|---|---|---|---|
| Exposure Time (weeks) | Control (no additives) | Example 1,0.15% | Example 2,0.14% | Example 3,0.14% | Example 4,0.09% (this invention) |
| 0 | 3.63 | 2.50 | 3.04 | 3.37 | 2.45 |
| 1 | 4.55 | 2.96 | 3.66 | 3.89 | 2.86 |
| 2 | 5.23 | 3.18 | 3.95 | 4.19 | 3.06 |
| 3 | 6.73 | 3.45 | 4.43 | 4.56 | 3.29 |
| 4 | 7.72 | 3.76 | 4.88 | 5.07 | 3.62 |
| 5 | 9.88 | 5.42 | 6.62 | 6.75 | 4.86 |
| 7 | 11.82 | 5.91 | 7.56 | 8.25 | 5.34 |
| 8 | 12.44 | 6.82 | 8.47 | 8.73 | 6.26 |
| 9 | 13.81 | 7.79 | 9.40 | 9.66 | 6.34 |

EXAMPLES 7 - 11

In a similar manner, blends were made of the acid-reduced polyglutarimide with mixtures of the additives of either Example 1 or Example 4 with also benzotriazole UV stabilizer (BZT; 2 (2-hydroxy-5-t-octylphenyl)benzotriazole and further with both the BZT UV stabilizer and a hindered amine light stabilizer (HALS). Of these, 770 refers to bis(2,2,6,6-tetramethyl-4-piperidinyl) dodecanedioate, and 944 to N,N'- bis-(2,2,6,6-tetramethyl-4-piperidinyl)-1,6-hexanediamine.

Pellets were heated at 150 °C for eight days and the color rated visually. Initial color (yellowness index) was also measured on plaques molded as in Examples 5 and 6, but no aging data at 150 °C was obtained on plaques, as they begin to distort at this high use temperature. A low level of blue toner was present in each sample. The additive is wt.percent based on glutarimide resin. Stearyl alcohol ( 0.2%) was present in all samples.

| Example | Ex. 1 | Ex. 4* | BTZ | 770 | 944 | YI Plaqu e (a) | Visual Color (b) |
|---|---|---|---|---|---|---|---|
| 7 | 0.15 | -- | 0.25 | --- | --- | 1.56 | very poor |
| 8 | --- | 0.09 | 0.25 | --- | --- | 1.20 | excellent |
| 9 | 0.15 | -- | 0.10 | --- | 0.16 | 1.55 | poor |
| 10 | --- | 0.09 | 0.10 | --- | 0.16 | 1.51 | good |
| 11 | --- | 0.09 | 0.10 | 0.125 | --- | 1.11 | good |

* This invention

(a) Molded; not further heated.

(b) Eight days; 150 °C; air oven.

EXAMPLE 12:

If tristearyl phosphite at 0.10 weight percent replaces distearyl pentaerythritol diphosphite in the formulations of Examples 1, 8, 10, or 11, similar improvements will be noted on initial molding and on heat aging over the unstabilized acid-reduced polyglutarimide or over such a glutarimide stabilized with a triaryl

phosphite.

While the invention has been described with reference to specific examples and applications, other modifications and uses for the invention will be apparent to those skilled in the art without departing from the spirit and scope of the invention defined in the appended claims.

## Claims

1. A plastics composition comprising a) polymer containing glutarimide units of the formula

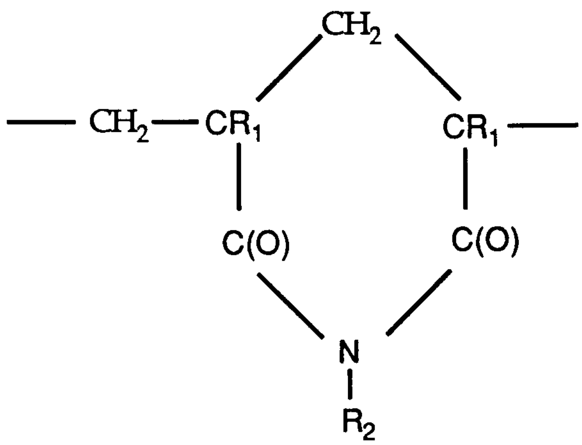

where $R_1$ is methyl, and $R_2$ is a n-, sec- or is- alkyl group of from 1 to 4 carbon atoms, wherein the weight percent of the glutarimide units in the copolymer is above about 50 %, and wherein the copolymer contains less than about 0.40 millequivalents of acid and anhydride per gram of the copolymer, and b) at least one trisaliphatic phosphite of the formula:

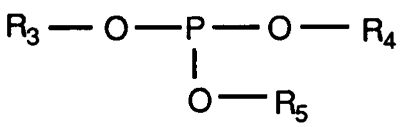

and/or aliphatic bicyclic diphosphite of the formula:

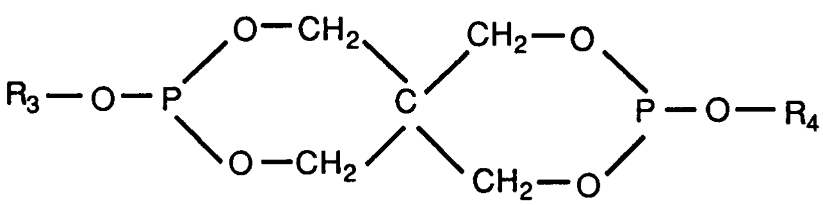

wherein $R_3$, $R_4$ and $R_5$ may be the same or different saturated alkyl group of from 1 to about 20 carbon atoms.

2. A composition as claimed in Claim 1 wherein $R_2$ is methyl.

3. A composition as claimed in Claim 1 wherein each of $R_3$ and $R_4$ have from about 12 to about 20 carbon atoms.

4. A composition as claimed in any preceding Claim which further contains one or more stabilizers against ultraviolet light degradation.

**5.** A composition as claimed in Claim 4 wherein one or more of the stabilizers against ultraviolet light degradation contains the functionality

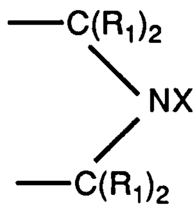

wherein X is H, lower alkyl, --CH2-CH2-O-, or --O • .

**6.** A composition as claimed in Claim 5 wherein X is hydrogen.

**7.** A composition as claimed in Claims 4 or 5 wherein one or more of the stabilizers against ultraviolet light degradation is a benzotriazole.

**8.** A molded or extruded object formed from a composition as claimed in any preceding Claim.

**9.** The use of trisaliphatic phosphite and/or aliphatic bicyclic diphosphite, as defined in Claim 1, as an optical property improver for glutarimide polymer.

European Patent Office

# EUROPEAN SEARCH REPORT

Application Number

EP 91 30 5114

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A,D | EP-A-332 136 (MITSUBISHI RAYON)<br>* page 5; table 1 *<br>* page 6; examples 1-4 *<br>* claims 1-10 *<br>--- | 4-7 | C08K5/524<br>C08K5/527<br>C08L33/24 |
| A | EP-A-341 588 (MITSUBISHI RAYON)<br>* page 5; examples 1-4 *<br>* claims 1-4 *<br>--- | 4 | |
| A | WPIL, FILE SUPPLIER, Derwent Publications ltd., London, GB; AN=89-071728<br>& jp-a-1022951 (Mitsubishi Rayon) 25-01-1989<br>*Abstract*<br>----- | 1-3 | |
| | | | TECHNICAL FIELDS SEARCHED (Int. Cl.5 ) |
| | | | C08K |

The present search report has been drawn up for all claims

| Place of search | Date of completion of the search | Examiner |
|---|---|---|
| THE HAGUE | 04 SEPTEMBER 1991 | SIEMENS T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)